# EUROPEAN PATENT APPLICATION

(11) **EP 4 707 741 A1**
(43) Date of publication of application: **11.03.2026**
(21) Application number: 23939658.3
(22) Date of filing: 31.05.2023
(51) Int. Cl.: G01C 21/34

(54) **INFORMATION PROCESSING METHOD, INFORMATION PROCESSING DEVICE, PROGRAM, AND STORAGE MEDIUM**

(71) Applicant: HONDA MOTOR CO., LTD., Tokyo 105-8404 (JP)
(72) Inventor: NISHIKAWA, Yuji, Tokyo 107-8556 (JP); SUZUKI, Atsuyuki, Tokyo 107-8556 (JP)
(74) Representative: Kiwit, Benedikt
(86) International application number: PCT/JP2023/020331
(87) International publication number: WO 2024/247183

(57) **Abstract**

An information processing method according to the present disclosure includes, at an information processing apparatus that communicates with a sound output device to be worn by a user, acquiring a guide route of a vehicle used by the user; and causing the sound output device to output a sound via communication with the sound output device while the vehicle is traveling on the guide route. Causing to output the sound includes making a left volume and a right volume of the sound imbalanced in accordance with an approaching degree of the vehicle to a location where the vehicle turns to left or right on the guide route.

## Description

### TECHNICAL FIELD

The present invention relates to an information processing method, an information processing apparatus, a program, and a storage medium.

### BACKGROUND ART

The technique for presenting the direction of an obstacle to a user of a vehicle by sound has been conventionally known. Patent Literature 1 discloses a technique for outputting, via a speaker, a warning sound of localizing a sound image in a direction in which an obstacle has been detected, in a case where the obstacle is approaching toward within a predetermined distance.

### CITATION LIST

### PATENT LITERATURE

PTL1: Japanese Patent Laid-Open No. 2020-123143

### SUMMARY OF INVENTION

### TECHNICAL PROBLEM

While using a call function or a route navigation function of a mobile terminal, by the way, a user is sometimes riding on a straddle type vehicle (simply referred to as a two-wheeled vehicle or a motorcycle, in some cases). In the above-described background art, for example, no consideration is given to causing a headset of an occupant to output the sound related to route navigation.

The present invention has been made in view of the above problem, and an object of the present invention is to achieve a technique that enables a user to intuitively grasp a traveling situation toward a location where turning to the left or right, in route navigation.

### SOLUTION TO PROBLEM

According to the present invention, an information processing method,
at an information processing apparatus that communicates with a sound output device to be worn by a user, the information processing method characterized by comprising:
acquiring a guide route of a vehicle used by the user; and
causing the sound output device to output a sound via communication with the sound output device while the vehicle is traveling on the guide route, wherein
causing to output the sound includes making a left volume and a right volume of the sound imbalanced in accordance with an approaching degree of the vehicle to a location where the vehicle turns to left or right on the guide route, is provided.

### ADVANTAGEOUS EFFECTS OF INVENTION

According to the present invention, in the route navigation, a user is able to intuitively grasp a traveling situation toward a location where turning to the left or right.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a side view of a straddle type vehicle according to one embodiment of the present invention.
FIG. 2 is a front view of the straddle type vehicle of FIG. 1.
FIG. 3 is a block diagram illustrating a configuration example of the straddle type vehicle according to one embodiment.
FIG. 4 is a diagram illustrating an outline of a route navigation system according to one embodiment.
FIG. 5 is a block diagram illustrating a hardware configuration example of a terminal device according to one embodiment.
FIG. 6 is a block diagram illustrating a software configuration example of the terminal device according to one embodiment.
FIG. 7 is a block diagram illustrating a configuration example of a sound output device according to one embodiment.
FIG. 8 is a diagram for describing sound output on a guide route according to one embodiment.
FIG. 9 is a diagram for describing an output example of sound in accordance with an approaching degree according to one embodiment.
FIG. 10 is a flowchart illustrating an example of the route navigation processing according to one embodiment.
FIG. 11 is a diagram for describing an output example of sound in accordance with a travel lane according to one embodiment.
FIG. 12 is a diagram for describing an output example of sound for a sound source to be present in a specific direction regardless of the orientation of user's head (the orientation of the sound output device) according to one embodiment.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

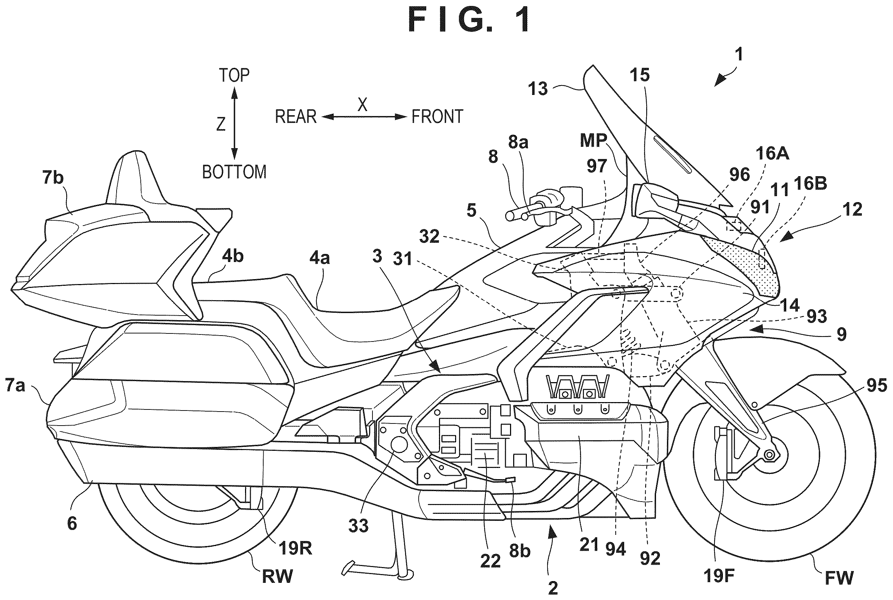

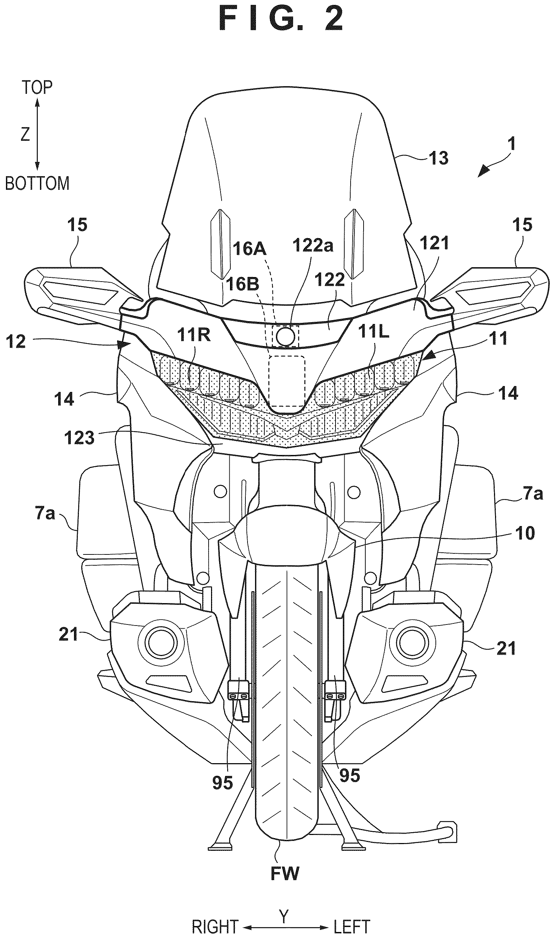

In FIG. 1 and FIG. 2, arrows X, Y, and Z indicate directions orthogonal to one another, X direction indicates a longitudinal direction of a straddle type vehicle, Y direction indicates a vehicle width direction (a left-and-right direction) of the straddle type vehicle, and Z direction indicates an up-and-down direction. In addition, in the following description, the left and right of the straddle type vehicle are the left and right when viewed in a straight forward direction. Further, a front side or a rear side in the longitudinal direction of the straddle type vehicle will be simply referred to as a front side or a rear side, in some cases.

An information processing apparatus according to the present embodiment is used in a route navigation system for providing route navigation of the vehicle. In the following description, description will be made with regard to a case where the information processing apparatus is a terminal device as an example, such as a smartphone, a tablet terminal, or a wearable terminal. However, the information processing apparatus is not limited to this example, may be incorporated in a vehicle, or may be a device to be attached to the vehicle for use. In addition, as will be described later, in the route navigation system as one example, for example, a terminal device and a sound output device are connected on wireless communication, and the terminal device controls output of navigation speech from the sound output device, while the vehicle is traveling on a guide route. The sound output device may be, for example, a headset integrated with a helmet.

In the terminal device, the sound of each application represented by a route navigation application is output to the sound output device, and it is also possible to operate the terminal device through user's input into the sound output device. For example, the terminal device is capable of causing the sound output device to output various functions, such as weather information, navigation, phone conversation, a message, and music playback that can be implemented in the terminal device. In addition, it is possible to acquire operations related to these various functions via a microphone or a button provided in the sound output device. Such a configuration enables the user to use the functions of the terminal device without hindering driving operation, while the user is driving the vehicle.

### <External Appearance Configuration Example of Straddle Type Vehicle>

An external appearance configuration example of a vehicle according to the present embodiment will be described. FIG. 1 is a side view on a right side of a straddle type vehicle 1 according to one embodiment of the present invention, and FIG. 2 is a front view of the straddle type vehicle 1.

The straddle type vehicle 1 is a tourer type motorcycle suitable for a long distance movement. However, the present invention is applicable to various straddle type vehicles including any other type of motorcycle, and is also applicable to an electric vehicle using a motor as a drive source, in addition to a vehicle using an internal combustion engine as a drive source. Hereinafter, the straddle type vehicle 1 will be referred to as the vehicle 1, in some cases.

The vehicle 1 includes a power unit 2 between a front wheel FW and a rear wheel RW. In the present embodiment, the power unit 2 includes a horizontally opposed six-cylinder engine 21 and a transmission 22. The driving force of the transmission 22 is transmitted to the rear wheel RW through a drive shaft, not illustrated, to rotate the rear wheel RW.

The power unit 2 is supported by a vehicle body frame 3. The vehicle body frame 3 includes a pair of left and right main frames 31, which extend in X direction. A fuel tank 5 and an air cleaner box (not illustrated) are disposed above the main frames 31. On a front side of the fuel tank 5, a meter panel MP is provided, including an electronic image display device or the like that displays various types of information to a user who is a rider.

A head pipe 32, which rotatably supports a steering shaft (not illustrated) rotated by a handlebar 8, is provided at a front-side end portion of the main frame 31. A pair of left and right pivot plates 33 are provided at a rear end portion of the main frames 31. Lower end portions of the pivot plates 33 and the front end portions of the main frames 31 are connected with each other by a pair of left and right lower arms (not illustrated), and the power unit 2 is supported by the main frames 31 and the lower arms. A pair of left and right seat rails (not illustrated) extending rearward are also provided at rear end portions of the main frames 31, and the seat rails support a seat 4a on which the rider is seated, a seat 4b on which a passenger is seated, a rear trunk 7b, and the like.

A front end portion of a rear swing arm (not illustrated) extending in the front-and-rear direction is swingably supported by the pivot plate 33. The rear swing arm is swingable in the up-and-down direction, and the rear wheel RW is supported on its rear end portion. An exhaust muffler 6, which muffles exhaust of the engine 21, extends in X direction on a lower lateral side of the rear wheel RW. Left and right saddle backs 7a are respectively provided on upper lateral sides of the rear wheel RW.

A front suspension mechanism 9, which supports the front wheel FW, is formed at front end portions of the main frames 31. The front suspension mechanism 9 includes an upper link 91, a lower link 92, a fork support body 93, a cushion unit 94, and a pair of left and right front forks 95.

The upper link 91 and the lower link 92 are disposed at the front end portions of the main frames 31 so as to be vertically spaced apart from each other. Rear end portions of the upper link 91 and the lower link 92 are each swingably coupled to a support portion provided at the front end portions of the main frames 31. Front ends of the upper link 91 and the lower link 92 are each swingably coupled to the fork support body 93. The upper link 91 and the lower link 92 extend in the front-and-rear direction, and are also disposed substantially in parallel with each other.

The cushion unit 94 has a structure in which a shock absorber is inserted through a coil spring, and its upper end portion is swingably supported by the main frames 31. A lower end portion of the cushion unit 94 is swingably supported by the lower link 92.

The fork support body 93 has a tubular shape, and is also inclined rearward. A front end portion of the upper link 91 is rotatably coupled with an upper front portion of the fork support body 93. A front end portion of the lower link 92 is rotatably coupled with a lower rear portion of the fork support body 93.

A steering shaft 96 is supported by the fork support body 93 so as to be rotatable about its axis. The steering shaft 96 includes a shaft portion (not illustrated) that inserts into the fork support body 93. A bridge (not illustrated) is provided at a lower end portion of the steering shaft 96, and the pair of left and right front forks 95 are supported by such a bridge. The front wheel FW is rotatably supported by the front forks 95. An upper end portion of the steering shaft 96 is coupled with a steering shaft (not illustrated) to be rotated by the handlebar 8 via a link 97. The steering shaft 96 is rotated by steering the handlebar 8, and the front wheel FW is steered.

The vehicle 1 includes a brake device 19F, which applies the brakes on the front wheel FW, and a brake device 19F, which applies the brakes on the rear wheel RW. The brake devices 19F and 19R are configured to be actuated by the rider's operation on a brake lever 8a or a brake pedal 8b. The brake devices 19F and 19R are, for example, disc brakes. When the brake devices 19F and 19R are not distinguished between them, they will be collectively referred to as the brake device 19.

In a front portion of the vehicle 1, a headlight unit 11, which emits light ahead of the vehicle 1, is disposed. The headlight unit 11 according to the present embodiment is a headlight unit of binocular type that symmetrically includes a light irradiation unit 11R on a right side and a light irradiation unit 11L on a left side. However, a headlight unit of monocular or trinocular type or a headlight unit of binocular type disposed asymmetrically to the left and right can also be adopted.

A front portion of the vehicle 1 is covered with a front cowl 12, and front side portions of the vehicle 1 are respectively covered with a pair of left and right side cowls 14. A screen 13 is disposed above the front cowl 12. The screen 13 is a windshield that reduces wind pressure applied to the rider while traveling, and is formed of, for example, a transparent resin member.

A pair of left and right side mirror units 15 are respectively disposed on lateral sides of the front cowl 12. The side mirror unit 15 supports a side mirror (not illustrated) for the rider to visually recognize a rear side.

In the present embodiment, the front cowl 12 includes cowl members 121 to 123. The cowl member 121 extends in Y direction to constitute a main body of the front cowl 12, and the cowl member 122 constitutes an upper part of the cowl member 121. The cowl member 123 is disposed to be spaced apart from the cowl member 121 in a downward direction.

An opening for exposing the headlight unit 11 is formed between the cowl member 121 and the cowl member 123 and between the pair of left and right side cowls 14. The cowl member 121 defines an upper edge of the opening. The cowl member 123 defines a lower edge of the opening. The side cowls 14 define left and right side edges of the opening.

An imaging unit 16A and a radar 16B, each of which serves as a detection device that detects a situation ahead of the vehicle 1, are disposed behind the front cowl 12. The radar 16B is, for example, a millimeter wave radar. The imaging unit 16A includes an imaging element such as a CCD image sensor or a CMOS image sensor, and an optical system such as a lens, and captures an image ahead of the vehicle 1. The imaging unit 16A is disposed behind the cowl member 122, which constitutes an upper portion of the front cowl 12. In the cowl member 122, an opening 122a, which penetrates through the cowl member 122, is formed, and the imaging unit 16A captures an image ahead of the vehicle 1 through the opening 122a.

The radar 16B is disposed behind the cowl member 121. Due to presence of the cowl member 121, presence of a detection unit 16 can be made inconspicuous in a front view of the vehicle 1, and degradation in external appearance of the vehicle 1 can be avoided. The cowl member 121 is made of a material such as resin that allows transmission of electromagnetic waves.

The imaging unit 16A and the radar 16B are disposed at a center portion in Y direction of the front cowl 12 in a vehicle front view. By disposing the imaging unit 16A and the radar 16B at the center portion in Y direction of the vehicle 1, wider imaging range and wider detection range are obtainable on the left and right ahead of the vehicle 1, and any situation ahead of the vehicle 1 is detectable without being overlooked. In addition, one imaging unit 16A and one radar 16B are capable of evenly monitoring the left and right ahead of the vehicle 1, and thus, it is particularly advantageous in the configuration of providing one imaging unit 16A and one radar 16B instead of providing a plurality of imaging units 16A and a plurality of radars 16B.

### <Functional Configuration Example of Straddle Type Vehicle>

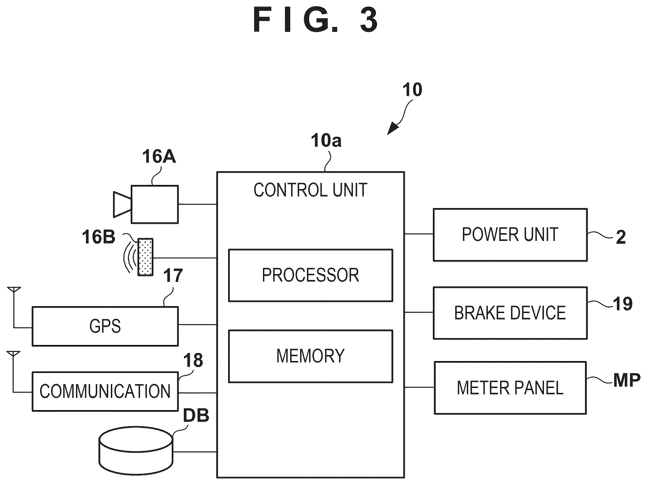

FIG. 3 is a block diagram of a control device 10 of the vehicle 1, and only necessary configurations are illustrated in relation to description to be described later. The vehicle 1 includes a control unit (ECU) 10a. The control unit 10a includes a processor represented by a CPU, a storage device such as a semiconductor memory, an input and output interface with an external device, a communication interface, or the like. The storage device stores programs executed by the processor, data used by the processor for processing, and the like. The control unit 10a may include a plurality of sets of processors, storage devices, interfaces, and the like corresponding to the respective functions of the vehicle 1.

The control unit 10a acquires detection results of the imaging unit 16A and the radar 16B, and constantly recognizes a target object and a road condition in the surroundings of the vehicle 1. In addition, the control unit 10a acquires information from a GPS sensor 17, a communication device 18, and a map information database DB. The GPS sensor 17 detects position information indicating a current position of the vehicle 1. The communication device 18 performs wireless communication with a server, not illustrated, that provides map information and traffic information, and acquires these pieces of information. The communication device 18 may be capable of wirelessly communicating with a terminal device carried by the user who uses the vehicle 1. The communication device 18 may transmit, to the terminal device, at least one of various types of information including a detection result of the vehicle 1, map information, position information, speed information, and control information for cooperating with an application of the terminal device. In the map information database DB, it is possible to store map information of high definition, and the control unit 10a is capable of identifying the form of a road on which the vehicle 1 is traveling and the position of the vehicle 1 in a lane with higher accuracy, based on the map information or the like.

The control unit 10a is capable of controlling each actuator of the power unit 2 and a brake 19. In the present embodiment, in a case of performing speed limitation processing to be described later, the control unit 10a controls each actuator of the power unit 2 and the brake 19. The control unit 10a is also capable of controlling display of the meter panel MP. In the present embodiment, various warning displays for the rider are performed on the meter panel MP. In the present embodiment, activation of warning is performed by displaying an image on the meter panel MP, but the activation of warning may be performed by turning on or blinking a lamp or by sound. The activation of warning by sound may be controlled so that the sound is output on wireless communication from the sound output device provided in a helmet of the user.

### <Outline of Route Navigation System>

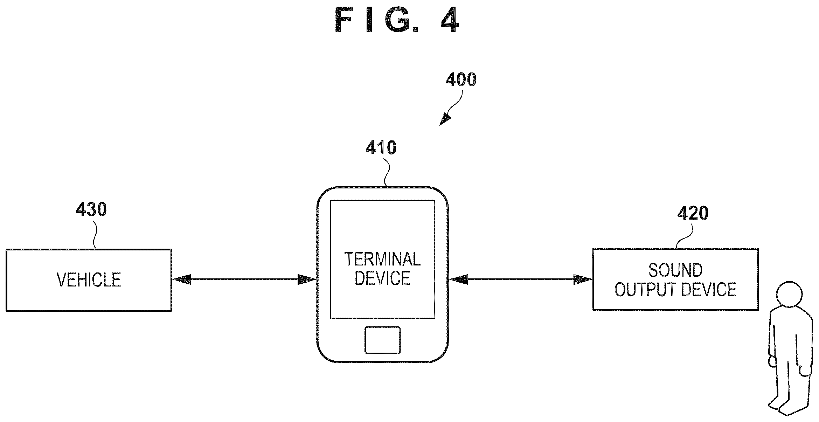

Next, an outline of the route navigation system according to the present embodiment will be described with reference to FIG. 4. In a route navigation system 400, a terminal device 410 is connected in a communication-enabling manner with a sound output device 420 and a vehicle 430. The vehicle 430 may be identical to the above-described vehicle 1. The terminal device 410 is an information processing apparatus that enables the route navigation for the vehicle 430, which is used by the user, and is an example of a smartphone, a tablet terminal, a wearable terminal, or the like, as described above. The terminal device 410 transmits at least one of sound data and control information to the sound output device 420, and causes the sound output device 420 to output the sound. In this situation, the terminal device 410 is capable of controlling the outputs from left and right speakers of the sound output device 420. The content of the sound to be output by the sound output device 420 is not particularly limited, as long as it can be output from a generally used terminal device. The sound may be, for example, sound that notifies information on an application including a route navigation application or the like, may be music being played back, or may be phone call voice received from a terminal device used by another user. The following description will be made by assuming that the terminal device 410 according to the present embodiment basically causes the sound output device 420 to output navigation speech on the route navigation application.

The sound output device 420 is a device that is worn by the user and that outputs the sound received from the terminal device 410. The sound output device 420 may be, for example, a headset integrated with a helmet, or may be a wireless earphone. The form of the sound output device 420 is not particularly limited, as long as it is wirelessly connected with the terminal device 410 and is capable of outputting the sound in different manners (by different sounds or at different volumes) from each other on the left and the right. The sound output device 420 according to the present embodiment includes a communication unit that enables communication using Bluetooth (registered trademark), and is connected with the terminal device 410.

The terminal device 410 is connected with the vehicle 430, and performs start processing of the route navigation application. In the vehicle 430, the control unit 10a transmits, to the terminal device 410, a start signal of an application to be implemented in the terminal device 410. In addition, the communication device 18 of the vehicle 430 is a communication unit that enables wireless communication using Bluetooth (registered trademark) with the terminal device 410.

### <Configuration of Terminal Device>

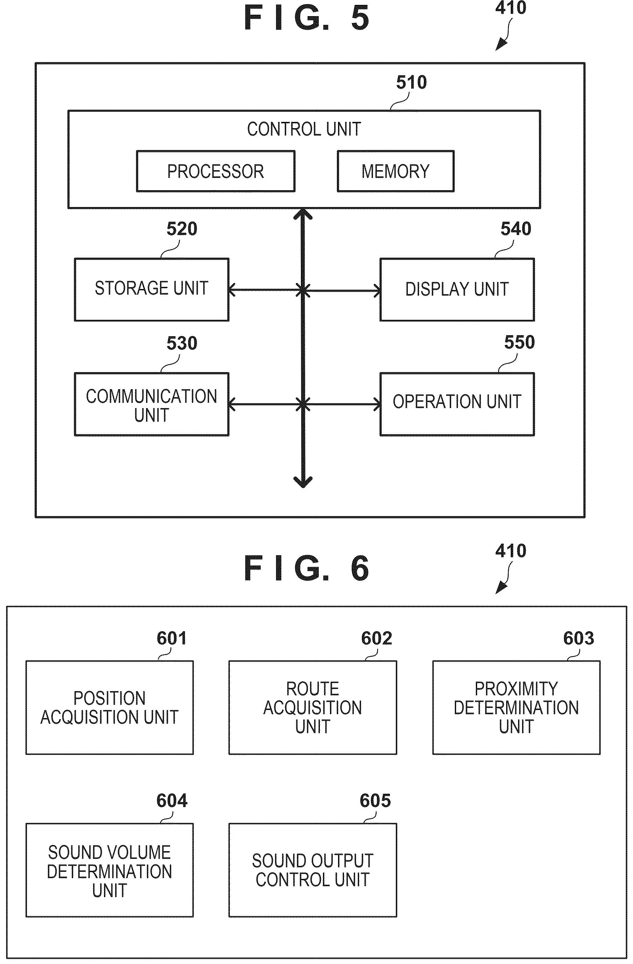

FIG. 5 illustrates an example of a hardware configuration of the terminal device 410. The terminal device 410 includes, for example, a controller 510, a storage unit 520, a communication unit 530, a display unit 540, and an operation unit 550. The controller 510 includes one or more processors represented by a CPU and a memory that is a storage device such as a semiconductor memory, and executes a program stored in the storage unit 520 to perform each process. The storage unit 520 is a nonvolatile storage device such as a semiconductor memory or a hard disk. The program stored in the storage unit 520 includes an application program of a navigation service by the route navigation system according to the present embodiment. Such an application program may be downloaded from a server, or may be distributed in a storage medium such as a CD-ROM.

In addition, the storage unit 520 stores map data that can be used for the route navigation of the vehicle 430. The map data stored in the storage unit 520 may include names of places, names of buildings, and in addition, information about route search. The information about the route search includes information about a node corresponding to a connection point in a road network including navigation locations such as an intersection in the route navigation, information about a link on a road formed between nodes, and the like.

The communication unit 530 is a communication unit that enables wireless communication using Bluetooth (registered trademark) with the sound output device 420 and the vehicle 430. The display unit 540 includes a display panel, for example, a liquid crystal display, and is capable of displaying a result of processing, that is, displaying a map on which the route navigation is being provided together with a current location. The operation unit 550 includes, for example, a touch panel or a button, and acquires user's input, based on user's contact with the touch panel or the like. The operation unit 550 may acquire, for example, a destination or the position information of the user, as will be described later, to be used in the route navigation system.

FIG. 6 illustrates an example of a software configuration of the terminal device 410 according to the present embodiment. The terminal device 410 according to the present embodiment includes, for example, a position acquisition unit 601, a route acquisition unit 602, a proximity determination unit 603, a sound volume determination unit 604, and a sound output control unit 605.

The position acquisition unit 601 acquires the position of the terminal device 410 as the position of the vehicle 430. For example, the position acquisition unit 601 may receive a global navigation satellite system (GNSS) signal by a GPS sensor, not illustrated, and may acquire the position of the terminal device 410, based on the GNSS signal that has been received. In addition, the position acquisition unit 601 may acquire the position information that has been acquired by the GPS 17, which is provided in the vehicle 430, as the position information of the vehicle 430.

In addition, the position acquisition unit 601 is capable of acquiring a user's destination to be used in the route navigation system. For example, the position acquisition unit 601 is capable of acquiring the destination, based on user's voice input into a microphone provided in the sound output device 420. Alternatively, the position acquisition unit 601 may acquire the user's destination, based on, for example, user's input into a touch panel of the terminal device 410. In addition, the destination may be acquired, based on user's input at the time of using the route navigation application, or may be set beforehand.

In the route navigation system 400 according to the present embodiment, it may be possible to search for the destination using the user's voice input. The destination may be searched for, for example, by name, may be searched for by address, or may be searched for by category, such as a gasoline station or a parking lot.

The route acquisition unit 602 acquires a guide route to be used in the route navigation of the vehicle 430. The route acquisition unit 602 according to the present embodiment acquires the guide route, based on the position and the destination of the vehicle acquired by the position acquisition unit 601 and the map data. The route acquisition unit 602 may transmit the position and the destination of the vehicle to an external server or the vehicle 430 to acquire the guide route from the external server or the vehicle 430. Note that in a case where download of the guide route (or map data may be applicable) from the external server or the vehicle 430 to the terminal device 410 is completed beforehand, the terminal device 410 is capable of implementing the present embodiment without additionally communicating with the external server, as long as only Bluetooth communication is established with the sound output device 420.

The proximity determination unit 603 determines an approaching degree of the vehicle 430 to a location (a navigation location) where the vehicle 430 turns to the left or right on the guide route. The navigation location is, for example, an intersection or a junction. For example, the proximity determination unit 603 is capable of determining the approaching degree of the vehicle 430, by using a distance from the current location of the vehicle 430 to the navigation location (the location where the vehicle 430 turns to the left or right). In this case, the terminal device 410 is capable of causing the sound output device 420 to output the navigation speech of the route at a location a predetermined distance (examples including 5 km, 2 km, 1 km, 500 m, and 200 m) before the vehicle 430 arrives at the navigation location. The terminal device 410 outputs the navigation speech at each of a plurality of locations a predetermined distance before the vehicle 430 arrives at the navigation location.

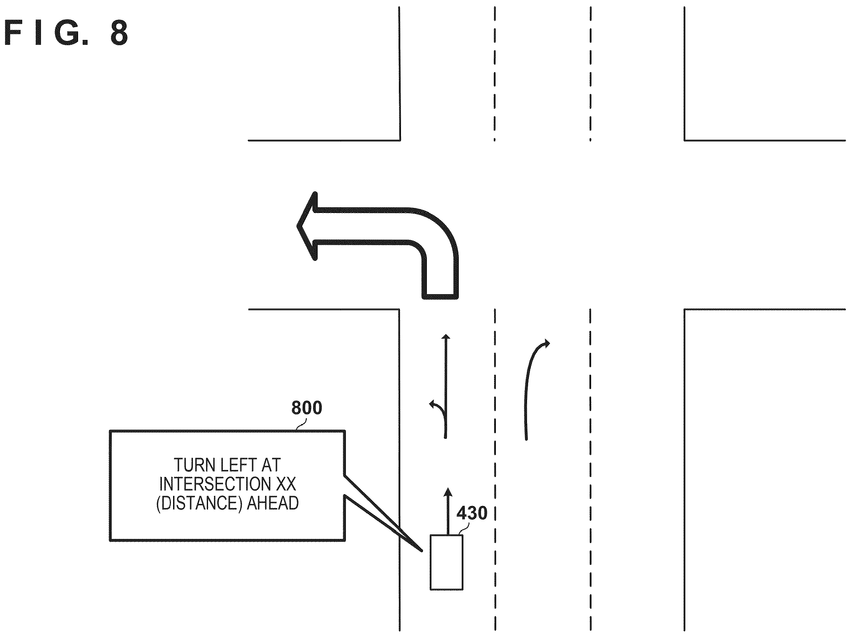

For example, as illustrated in FIG. 8, in a case of approaching a navigation location (an intersection) where the vehicle 430 turns to the left, the terminal device 410 causes the sound output device 420 to output a navigation speech 800 of the route at a location a predetermined distance before the vehicle 430 arrives at the navigation location. The navigation speech 800 of the route includes, for example, navigation speech such as "turn to the left at an intersection 500 m ahead".

The sound volume determination unit 604 determines the left and right volumes of the sound in accordance with the approaching degree of the vehicle 430 to the navigation location. For example, the sound volume determination unit 604 increases the imbalance between the left and right volumes of the sound, as the approaching degree of the vehicle 430 to the navigation location increases. In other words, the sound volume determination unit 604 makes the left and right volumes of the sound imbalanced in accordance with the approaching degree of the vehicle 430 to the navigation location. The sound volume determination unit 604 is capable of increasing the imbalance between the left and right volumes of the sound, as the distance from the current location of the vehicle 430 to the navigation location decreases. In this situation, the sound volume determination unit 604 increases the sound on the right with respect to the currently advancing direction of the vehicle 430 in a case where the vehicle 430 turns to the right, and increases the sound on the left with respect to the currently advancing direction of the vehicle 430 in a case where the vehicle 430 turns to the left.

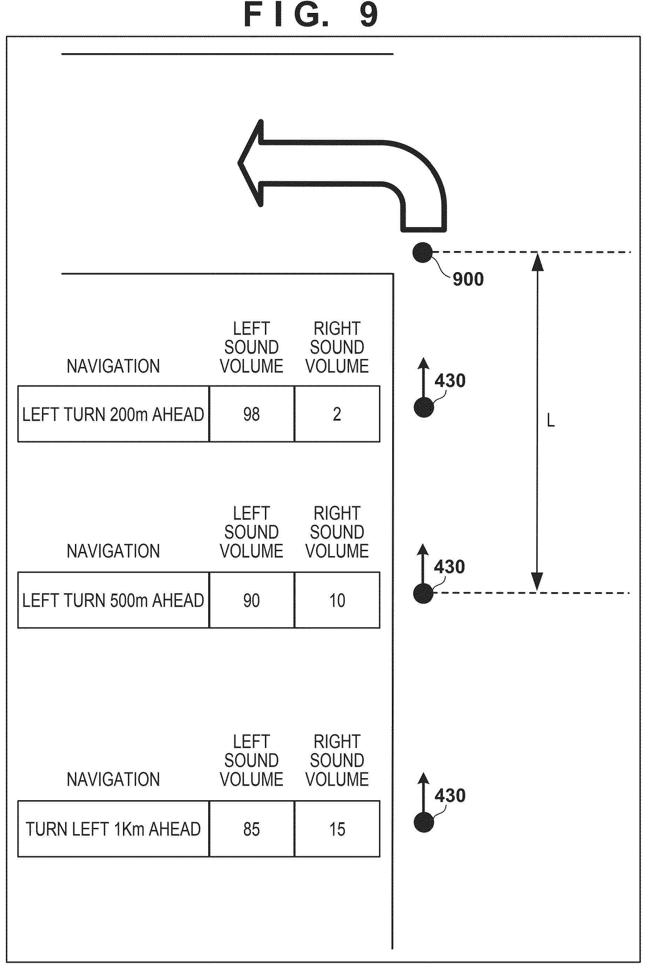

For example, as illustrated in FIG. 9, in a case where the distance from the current location of the vehicle 430 to a navigation location 900 is 1 km, the sound volume determination unit 604 is capable of determining the left and right volumes so that the ratio of the left volume to the right volume in the sound output device 420 is 85:15. In addition, in a case where the distance from the current location of the vehicle 430 to the navigation location 900 is 500 m, the sound volume determination unit 604 is capable of determining the left and right volumes so that the ratio of the left volume to the right volume in the sound output device 420 is 90: 10. Furthermore, in a case where the distance from the current location of the vehicle 430 to the navigation location 900 is 200 m, the sound volume determination unit 604 is capable of determining the left and right volumes so that the ratio of the left volume to the right volume in the sound output device 420 is 98:2. Although not explicitly illustrated in FIG. 9, at the timing when the current location of the vehicle 430 is the navigation location 900 (that is, the timing of turning), the sound volume determination unit 604 may determine the left and right volumes so that the ratio of the left volume to the right volume is 100:0. In this manner, the user is able to clearly identify the left and right volumes.

For example, the sound volume determination unit 604 stores data of a table in which a plurality of approaching degrees and the left and right volumes corresponding to the respective approaching degrees are associated with each other in the storage unit 520, and is capable of determining the volume in accordance with the approaching degree, by referring to the data of such a table.

In this manner, in the present embodiment, the sound volume determination unit 604 controls an imbalanced state between the left and right volumes of the sound in accordance with the approaching degree of the vehicle 430 to the navigation location, and thus the user is able to intuitively grasp the situation of approaching the navigation location (a traveling situation toward the navigation location) in the route navigation.

Note that the proximity determination unit 603 may determine the approaching degree of the vehicle 430, by using the time until the vehicle 430 arrives at the navigation location. In this case, the terminal device 410 is capable of causing the sound output device 420 to output the navigation speech of the route at each location a predetermined time (examples including 5 minutes, 2 minutes, 1 minute, 30 seconds, 10 seconds, and 0 seconds) before the vehicle 430 arrives at the navigation location or at the time of arrival. In this case, the sound volume determination unit 604 is capable of increasing the imbalance between the left and right volumes of the sound, as the time until the vehicle 430 arrives at the navigation location decreases. Also in this manner, the user is able to intuitively grasp the situation of approaching the navigation location (the traveling situation toward the navigation location) in the route navigation.

The sound output control unit 605 transmits at least one of the sound data and the control information so that the sound is output at the left and right volumes that have been determined by the sound volume determination unit 604, and controls sound output from the sound output device 420.

### <Configuration of Sound Output Device>

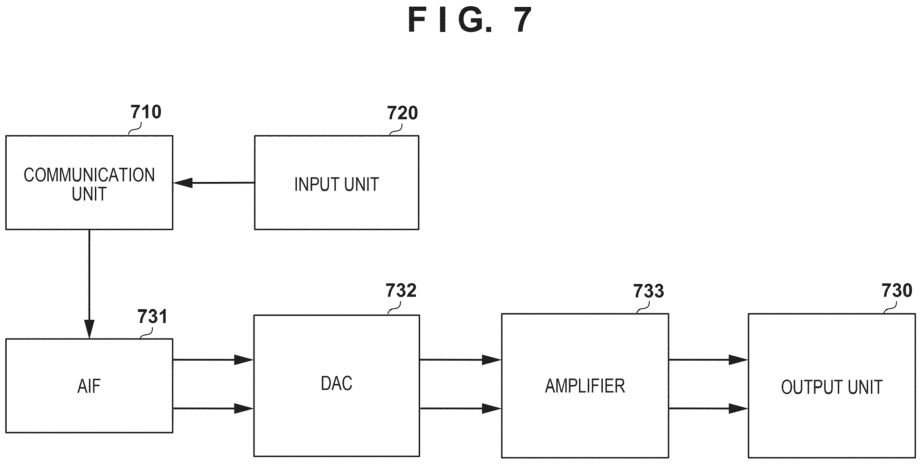

A configuration example of a headset as an example of the sound output device 420 will be described with reference to FIG. 7. The sound output device 420 includes a communication unit 710, an input unit 720, an output unit 730, an AIF 731, a DAC 732, and an amplifier 733. The communication unit 710 is a communication unit for performing wireless communication with the terminal device 410, and transmits and receives various types of data including, for example, at least one of the data of navigation speech and the control information between the devices.

The input unit 720 acquires user's input into an application operating on the terminal device 410. The input unit 720 according to the present embodiment includes, for example, a sound pickup device (a microphone), and acquires user's voice input for inputting the destination or the like. In addition, the input unit 720 may include, for example, a mechanical switch of dial type or toggle type, and may acquire user's input for adjusting an output volume, the setting for on/off of the sound, or the like.

The audio interface (AIF) 731 transmits signals of the sounds received from the terminal device 410 to the DAC 732 for every one of left and right channels. The digital to analog converter (DAC) 732 converts digital signals that have been input from the AIF 731 into analog signals. The amplifier 733 amplifies the analog signals that have been input from the DAC 732, and supplies the amplified analog signals to the output unit 730. The output unit 730 includes, for example, a speaker associated with the user's right ear and a speaker associated with the user's left ear. With such a configuration, the sound received from the terminal device 410 is output from each speaker at the volume that has been determined by the sound volume determination unit 604.

### <Route Navigation Processing>

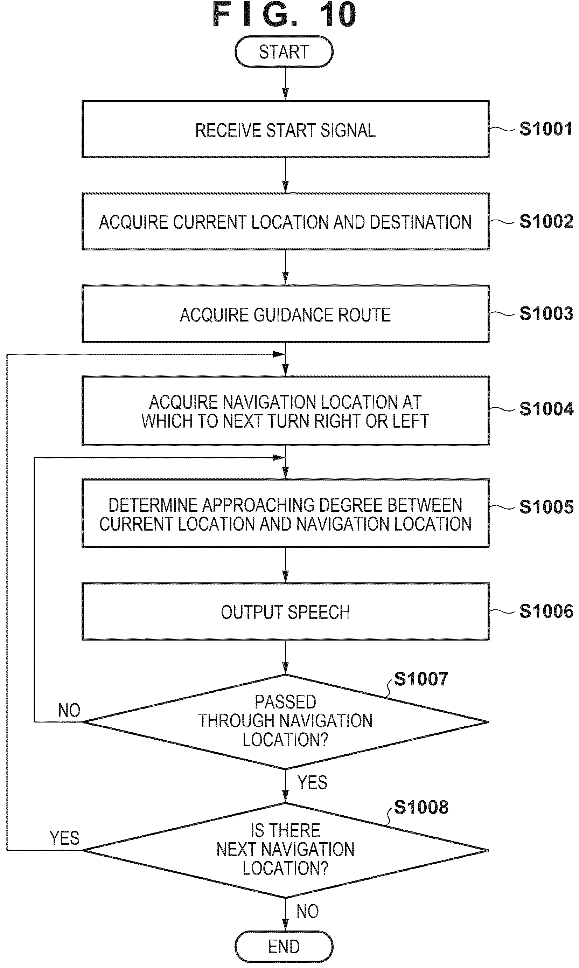

Route navigation processing performed in the terminal device 410 according to the present embodiment will be described with reference to FIG. 10. Note that (the processor of) the controller 510 of the terminal device 410 develops a program stored in the storage unit 520 in the memory, and executes the program, and, for example, the respective units or the like illustrated in FIG. 6 function, and achieve the route navigation processing. Note that in the following description, description will be made with regard to an example of controlling the left and right volumes of the sound for the navigation speech using the route navigation application. However, the present processing is not limited to the navigation speech, and the left and right volumes of the sound in the phone call voice or music may be controlled. In a case where the phone call voice or the music is controlled, for example, the left and right volumes of the phone call voice or the music may be caused to be imbalanced at the same timing as the approaching degree for generating the navigation speech. Such an (temporary) imbalance between the volumes of the navigation speech, the phone call voice, or the music enables the user to intuitively grasp whether to turn to the left or right at the next navigation location and the situation of approaching the navigation location.

In S1001, the controller 510 receives the start signal of the route navigation application from the control unit 10a of the vehicle 430, and starts the route navigation. Here, the control unit 10a is capable of transmitting the start signal to the terminal device 410 in response to activation of the vehicle 430, for example. Alternatively, the control unit 10a may transmit the start signal to the terminal device 410 as a response to a signal from the terminal device 410 that has executed the application for the route navigation. Furthermore, the control unit 10a may detect that the user has started using (for example, rides on) the vehicle 430, and may transmit the start signal to the terminal device 410. The transmission of the start signal by the control unit 10a is not limited to the above example, and may be performed in any method.

In S1002, the position acquisition unit 601 acquires position information of the current location and the destination of the vehicle 430. As described above, the position acquisition unit 601 is capable of acquiring the location of the terminal device 410 as the location of the vehicle 430 using the GPS function, for example, and is capable of acquiring the destination from the user's voice input. In S1003, the route acquisition unit 602 acquires a guide route including, for example, a plurality of navigation locations, based on the current location and the destination acquired in S1002 and the map data.

In S1004, the proximity determination unit 603 identifies a navigation location at which to turn to the left or right on the guide route acquired in S1003. Then, in S1005, the proximity determination unit 603 determines the approaching degree of the current location of the vehicle 430 to the navigation location. As described above, the proximity determination unit 603 is capable of determining the approaching degree of the vehicle 430, by using the distance from the current location of the vehicle 430 to the navigation location (the location where the vehicle 430 turns to the left or right). In this case, for example, the proximity determination unit 603 determines whether the current location of the vehicle 430 is located a predetermined distance (examples including 5 km, 2 km, 1 km, 500 m, and 200 m) before arriving at the navigation location. In addition, the proximity determination unit 603 may determine the approaching degree of the vehicle 430, by using the time until the vehicle 430 arrives at the navigation location. In this case, the proximity determination unit 603 determines whether it is a predetermined time (examples including 5 minutes, 2 minutes, 1 minute, 30 seconds, and 10 seconds) before the vehicle 430 arrives at the navigation location, based on, for example, the traveling speed of the vehicle 430 and the distance to the navigation location.

In S1006, in a case where the approaching degree of the current location of the vehicle 430 to the navigation location is either a predetermined distance or a predetermined time before, the sound output control unit 605 causes the sound output device 420 to output the speech. In this processing, first, the sound volume determination unit 604 determines the left and right volumes to be output by the sound output device 420 in accordance with the approaching degree determined by the proximity determination unit 603 (as described above with reference to FIG. 9). Then, the sound output control unit 605 transmits at least one of the sound data and the control information to the sound output device 420 so that the sound output device 420 outputs the speech at the left and right volumes determined by the sound volume determination unit 604.

In S1007, the controller 510 determines whether the vehicle 430 has passed through the navigation location (for example, based on a determination result of the proximity determination unit 603). In a case where the controller 510 determines that the vehicle 430 has passed through the navigation location, the processing proceeds to S1008, and in the other case, the processing returns to S1005. In this manner, the terminal device 410 causes the sound output device 420 to output a different speech in a stepwise manner at a plurality of approaching degrees until arriving at the navigation location.

In S1008, the controller 510 determines whether there is a next navigation location on the guide route acquired in S1003. In a case where the controller 510 determines that there is the next navigation location, the processing returns to S1004, and in the other case, the processing ends.

As described heretofore, in the above-described embodiment, in the terminal device 410, which communicates with the sound output device 420 worn by the user, the guide route of the vehicle 430 to be used by the user is acquired, and the sound output device 420 is caused to output the speech while the vehicle 430 is traveling on the guide route. In this situation, the left and right volumes of the sound are made imbalanced in accordance with the approaching degree of the vehicle 430 to the location where the vehicle 430 turns to the left or right on the guide route. In this manner, in the route navigation, the user is able to intuitively grasp the situation of approaching the navigation location (the traveling situation toward the navigation location).

### (Other Embodiments)

In the above-described embodiment, the left and right volumes output by the sound output device 420 are controlled in accordance with the approaching degree of the vehicle 430 to the navigation location. However, the left and right volumes output by the sound output device 420 may be controlled in accordance with the lane in which the vehicle 430 is traveling. For example, the controller 510 may make the left and right volumes of the sound imbalanced in accordance with the current travel lane in which the vehicle 430 is traveling toward the navigation location on the guide route. For example, as the current travel lane is farther from the travel lane appropriate for turning to the left or right on the guide route, the controller 510 can increase the imbalance between the left and right volumes of the sound.

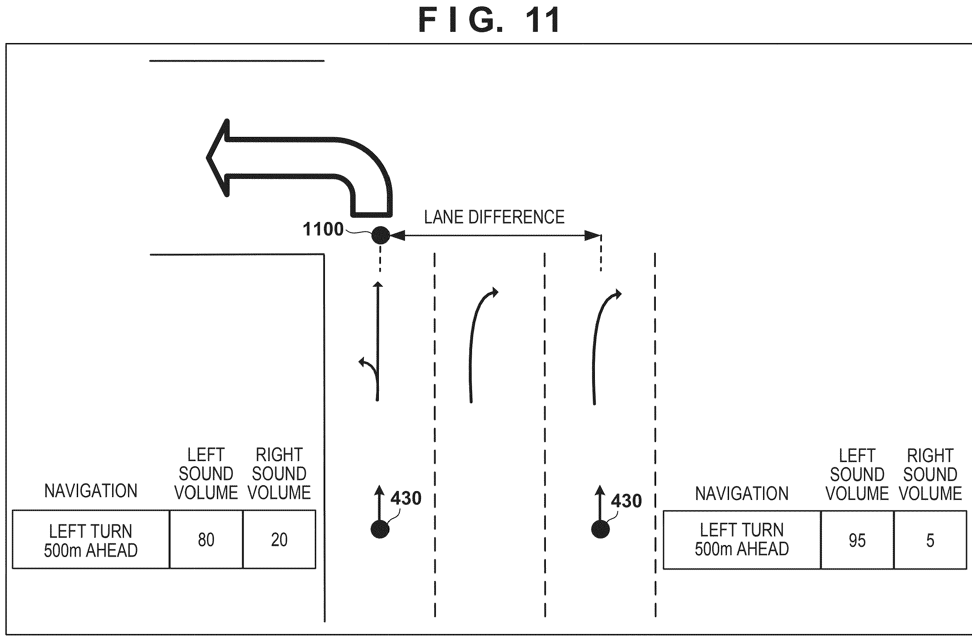

For example, FIG. 11 illustrates an example of controlling the imbalance between the left and right sounds in accordance with a relationship between the travel lane in which the vehicle 430 is traveling and the travel lane appropriate for turning to the left or right on the guide route. For example, in a case of turning to the left at an intersection where a navigation location 1100 is provided, it is assumed that the leftmost lane is determined beforehand as a travel lane appropriate for turning to the left. In this case, while the vehicle 430 is traveling in the leftmost lane, the controller 510 determines the left and right volumes of the sound in the navigation speech "turn to the left at an intersection 500 m ahead" so that the ratio of the left volume to the right volume is 80:20.

On the other hand, while the vehicle 430 is traveling in the rightmost lane, the controller 510 determines the left and right volumes of the sound in the navigation speech "turn to the left at an intersection 500 m ahead" so that the ratio of the left volume to the right volume is 95:5.

In this manner, in the route navigation, while moving to the navigation location, the user is able to intuitively grasp a situation of whether the vehicle is traveling in an appropriate lane (the traveling situation toward the navigation location). Note that in the example that has been described with reference to FIG. 11, as the current travel lane is farther from the travel lane appropriate for turning to the left or right on the guide route (that is, as an urgency level increases), the imbalance between the left and right volumes of the sound is increased. In addition to this processing, the entire volume may be increased, as the current travel lane is farther from the travel lane appropriate for turning to the left or right on the guide route (that is, as the urgency level increases). That is, the controller 510 determines a difference between the left and right volumes so that the imbalance between left and right volumes of the sound increases, as the current travel lane is farther from the travel lane appropriate for turning to the left or right on the guide route, and in addition, increases the left and right volumes of the sound while keeping the imbalance, as the current travel lane is farther from the travel lane appropriate for turning to the left or right on the guide route. In this manner, the user is able to more intuitively grasp the urgency level due to a difference in travel lane.

In addition, in the above description, the left and right volumes output by the sound output device 420 are controlled in accordance with the approaching degree of the vehicle 430 to the navigation location or the lane in which the vehicle 430 is travelling.

In the above-described navigation speech for a specific approaching degree or a specific vehicle lane, the sound volume determination unit 604 may localize the sound image as if the sound source is present in a specific direction regardless of the direction in which the user's neck faces. For example, the sound volume determination unit 604 may obtain sensor information from a gyro sensor built in, for example, the sound output device 420, and may adjust the volume or timing of the sound to be output by the sound output device 420 between the left and right to localize the sound image.

The navigation speech of localizing the sound image in the turning direction is output to the user at the navigation location where turning to the left or right, and thus it becomes possible to provide the navigation speech by which the direction is easily understood intuitively. On the other hand, in a case where the direction in which the user's neck faces changes, the position of the sound image changes with respect to the advancing direction of the vehicle. In order to prevent such a change, the sound volume determination unit 604 localizes the sound image in the advancing direction of the vehicle.

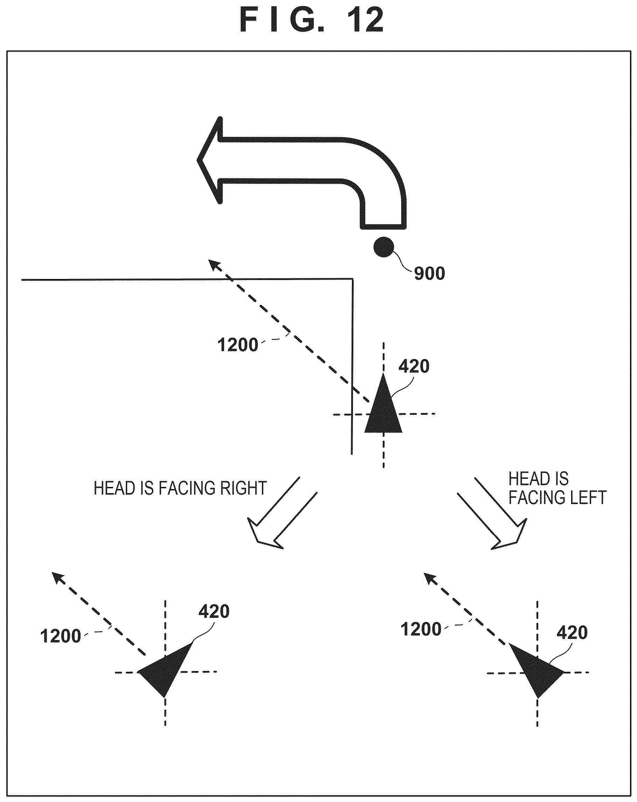

FIG. 12 illustrates an output example of the sound for a sound source to be present in a specific direction regardless of the orientation of the user's head (the orientation of the sound output device). For example, in a case where the vehicle is approaching the navigation location 900, it is assumed that the sound volume determination unit 604 outputs, for example, the navigation speech "turn to the left at an intersection 200 m ahead" at a ratio of the left volume to the right volume 98:2. In this timing, in a case where the sound output device 420, which is worn on the user's head, faces the front with respect to the advancing direction, it is assumed that a sound image is formed in a direction 1200 in accordance with the volume ratio. In this case, the sound volume determination unit 604 compensates the left and right volumes in accordance with the direction of the sound output device 420, and controls the sound output so that the sound image is present in the identical direction (that is, the direction 1200) with respect to the advancing direction. In other words, the sound is output as if the sound source is present in a specific direction regardless of the orientation of the user's neck. Also in this manner, the user is able to intuitively grasp the traveling situation toward the location where turning to the left or right.

In addition, in the route navigation system according to the present embodiment, the sound output device is caused to output the speech at the navigation location. However, in addition to this, lighting of a line LED on a meter panel may also be used. For example, together with the navigation speech for turning to the left or right, the terminal device 410 may cause the meter panel, which is provided in the vehicle 430, or a panel provided in a helmet in which the sound output device 420 is built to provide light emission display in a direction turning to the left or right. In this light emission display, for example, imbalance of brightness can be made between right-direction brightness and left-direction brightness.

### <Summary of Embodiments>

1. An information processing method in the above embodiments comprises:
   at an information processing apparatus (for example, 410, 430) that communicates with a sound output device (for example, 420) to be worn by a user,
   acquiring (for example, S1003) a guide route of a vehicle used by the user; and
   causing (for example, S1006) the sound output device to output a sound via communication with the sound output device while the vehicle is traveling on the guide route, wherein
   causing to output the sound includes making a left volume and a right volume of the sound imbalanced (for example, S1005, S1006) in accordance with an approaching degree of the vehicle to a location where the vehicle turns to left or right on the guide route.
   According to this embodiment, the user is able to intuitively grasp the situation of approaching the navigation location (the traveling situation toward the navigation location) in the route navigation.
2. In the information processing method in the above embodiments, causing to output the sound includes increasing an imbalance between the left volume and the right volume of the sound, as the approaching degree of the vehicle to the location where the vehicle turns to the left or right increases.
   According to this embodiment, the user is able to intuitively grasp the approaching degree to the navigation location in the route navigation.
3. In the information processing method in the above embodiments, causing to output the sound includes increasing the imbalance between the left volume and the right volume of the sound, as a distance from a current location of the vehicle to the location where the vehicle turns to the left or right decreases.
   According to this embodiment, the user is able to intuitively grasp the approaching degree to the navigation location in accordance with the distance to the navigation location.
4. In the information processing method in the above embodiments, causing to output the sound includes increasing the imbalance between the left volume and the right volume of the sound, as a time until the vehicle arrives at the location where the vehicle turns to the left or right decreases.
   According to this embodiment, the user is able to intuitively grasp the approaching degree to the navigation location in accordance with the time until the vehicle arrives at the navigation location.
5. In the information processing method of the above embodiments, causing to output the sound includes increasing the sound on the right with respect to a currently advancing direction of the vehicle in a case where the vehicle turns to the right, and increasing the sound on the left with respect to the currently advancing direction of the vehicle in a case where the vehicle turns to the left.
   According to this embodiment, it becomes possible to intuitively grasp whether to turn to the left or right at the next navigation location in accordance with the imbalance between the volumes.
6. In the information processing method in the above embodiments, the sound is a navigation speech for route navigation of the vehicle, based on the guide route.
   According to this embodiment, it becomes possible to intuitively grasp whether to turn to the left or right at the next navigation location and the approaching degree to the navigation location in accordance with the imbalance between the volumes of the navigation speech.
7. In the information processing method of the above embodiments, the sound includes phone call voice received from a terminal device used by another user.
   According to this embodiment, it becomes possible to intuitively grasp whether to turn to the left or right at the next navigation location and the approaching degree to the navigation location in accordance with the imbalance in the volume of the phone call voice.
8. In the information processing method of the above embodiments, the sound includes music being played back.
   According to this embodiment, it becomes possible to intuitively grasp whether to turn to the left or right at the next navigation location and the approaching degree to the navigation location in accordance with the imbalance between the volumes of the music being played back.
9. In the information processing method of the above embodiments, the information processing apparatus is a terminal device.
   According to this embodiment, even though the vehicle does not have the function, the user is able to intuitively grasp the situation of approaching the navigation location in the route navigation, by using the terminal device.
10. In the information processing method of the above embodiments, the information processing apparatus is included in the vehicle.
   According to this embodiment, with a simple configuration including only the vehicle and the sound output device, it becomes possible to intuitively grasp the situation of approaching the navigation location in the route navigation.
11. In the information processing method of the above embodiments, it further comprises
   receiving a start signal from a control unit of a straddle type vehicle that is the vehicle, wherein
   acquisition of the guide route is started upon receipt of the start signal.
   According to this embodiment, it becomes possible to start the route navigation processing in response to use of the vehicle having started.
12. An information processing method of the above embodiments comprises:
   at an information processing apparatus that communicates with a sound output device to be worn by a user,
   acquiring a guide route of a vehicle used by the user; and
   causing the sound output device to output a sound via communication with the sound output device while the vehicle is traveling on the guide route, wherein
   causing to output the sound includes making a left volume and a right volume of the sound imbalanced in accordance with a current travel lane in which the vehicle is traveling toward a location where the vehicle turns to left or right on the guide route.
   According to this embodiment, in the route navigation, the user is able to intuitively grasp the situation of whether the vehicle is traveling in an appropriate lane (the traveling situation toward the navigation location) while moving to the navigation location.
13. In the information processing method of the above embodiments, causing to output the sound includes increasing an imbalance between the left volume and the right volume of the sound, as the current travel lane is farther from a travel lane appropriate for turning to the left or the right on the guide route.
   According to this embodiment, in the route navigation, the user is able to intuitively grasp a separation degree from an appropriate lane.
14. In the information processing method of the above embodiments, causing to output the sound includes increasing an imbalance between the left volume and the right volume of the sound, as the current travel lane is farther from a travel lane appropriate for turning to the left or the right on the guide route, and increasing the left volume and the right volume of the sound while keeping the imbalance, as the current travel lane is farther from the travel lane appropriate for turning to the left or the right on the guide route.
   According to this embodiment, in the route navigation, the user is able to further intuitively grasp an urgency level in accordance with the separation degree from an appropriate lane.
15. In the information processing method of the above embodiments, the sound is a navigation speech for route navigation of the vehicle, based on the guide route.
   According to this embodiment, it becomes possible to intuitively grasp whether to turn to the left or right at the next navigation location and the approaching degree to the navigation location in accordance with the imbalance between the volumes of the navigation speech.
16. In the information processing method of the above embodiments, the sound includes phone call voice received from a terminal device used by another user.
   According to this embodiment, it becomes possible to intuitively grasp whether to turn to the left or right at the next navigation location and the approaching degree to the navigation location in accordance with the imbalance in the volume of the phone conversation voice.
17. In the information processing method of the above embodiments, the sound includes music being played back.
   According to this embodiment, it becomes possible to intuitively grasp whether to turn to the left or right at the next navigation location and the approaching degree to the navigation location in accordance with the imbalance between the volumes of the music being played back.
18. An information processing apparatus (for example, 410, 430) of the above embodiments that communicates with a sound output device to be worn by a user, comprises:
   route acquisition means (for example, 602) for acquiring a guide route of a vehicle used by the user; and
   control means (for example, 605) for causing the sound output device to output a sound via communication with the sound output device while the vehicle is traveling on the guide route, wherein
   the control means makes a left volume and a right volume of the sound imbalanced in accordance with an approaching degree of the vehicle to a location where the vehicle turns to left or right on the guide route.
   According to this embodiment, the user is able to intuitively grasp the situation of approaching the navigation location (the traveling situation toward the navigation location) in the route navigation.
19. An information processing apparatus (for example, 410, 430) of the above embodiments that communicates with a sound output device to be worn by a user, comprises:
   route acquisition means (for example, 602) for acquiring a guide route of a vehicle used by the user; and
   control means (for example, 605) for causing the sound output device to output a sound via communication with the sound output device while the vehicle is traveling on the guide route, wherein
   the control means makes a left volume and a right volume of the sound imbalanced in accordance with a current travel lane in which the vehicle is traveling toward a location where the vehicle turns to left or right on the guide route.

According to this embodiment, in the route navigation, the user is able to intuitively grasp the situation of whether the vehicle is traveling in an appropriate lane (the traveling situation toward the navigation location) while moving to the navigation location.

The invention is not limited to the foregoing embodiments, and various variations/changes are possible within the spirit of the invention.

### REFERENCE SIGNS LIST

- 501: Controller
- 601: Position acquisition unit
- 602: Route acquisition unit
- 603: Proximity determination unit
- 604: Sound volume determination unit
- 605: Sound output control unit

## Claims

1. An information processing method,
at an information processing apparatus that communicates with a sound output device to be worn by a user, the information processing method **characterized by** comprising:
acquiring a guide route of a vehicle used by the user; and
causing the sound output device to output a sound via communication with the sound output device while the vehicle is traveling on the guide route,
wherein
causing to output the sound includes making a left volume and a right volume of the sound imbalanced in accordance with an approaching degree of the vehicle to a location where the vehicle turns to left or right on the guide route.

2. The information processing method according to claim 1, **characterized in that** causing to output the sound includes increasing an imbalance between the left volume and the right volume of the sound, as the approaching degree of the vehicle to the location where the vehicle turns to the left or right increases.

3. The information processing method according to claim 2, **characterized in that** causing to output the sound includes increasing the imbalance between the left volume and the right volume of the sound, as a distance from a current location of the vehicle to the location where the vehicle turns to the left or right decreases.

4. The information processing method according to claim 2, **characterized in that** causing to output the sound includes increasing the imbalance between the left volume and the right volume of the sound, as a time until the vehicle arrives at the location where the vehicle turns to the left or right decreases.

5. The information processing method according to claim 1, **characterized in that** causing to output the sound includes increasing the sound on the right with respect to a currently advancing direction of the vehicle in a case where the vehicle turns to the right, and increasing the sound on the left with respect to the currently advancing direction of the vehicle in a case where the vehicle turns to the left.

6. The information processing method according to claim 1, **characterized in that** the sound is a navigation speech for route navigation of the vehicle, based on the guide route.

7. The information processing method according to claim 1, **characterized in that** the sound includes phone call voice received from a terminal device used by another user.

8. The information processing method according to claim 1, **characterized in that** the sound includes music being played back.

9. The information processing method according to claim 1, **characterized in that** the information processing apparatus is a terminal device.

10. The information processing method according to claim 1, **characterized in that** the information processing apparatus is included in the vehicle.

11. The information processing method according to claim 1, **characterized by** further comprising
receiving a start signal from a control unit of a straddle type vehicle that is the vehicle, wherein
acquisition of the guide route is started upon receipt of the start signal.

12. An information processing method,
at an information processing apparatus that communicates with a sound output device to be worn by a user, the information processing method **characterized by** comprising:
acquiring a guide route of a vehicle used by the user; and
causing the sound output device to output a sound via communication with the sound output device while the vehicle is traveling on the guide route,
wherein
causing to output the sound includes making a left volume and a right volume of the sound imbalanced in accordance with a current travel lane in which the vehicle is traveling toward a location where the vehicle turns to left or right on the guide route.

13. The information processing method according to claim 12, **characterized in that** causing to output the sound includes increasing an imbalance between the left volume and the right volume of the sound, as the current travel lane is farther from a travel lane appropriate for turning to the left or the right on the guide route.

14. The information processing method according to claim 12, **characterized in that** causing to output the sound includes increasing an imbalance between the left volume and the right volume of the sound, as the current travel lane is farther from a travel lane appropriate for turning to the left or the right on the guide route, and increasing the left volume and the right volume of the sound while keeping the imbalance, as the current travel lane is farther from the travel lane appropriate for turning to the left or the right on the guide route.

15. The information processing method according to claim 12, **characterized in that** the sound is a navigation speech for route navigation of the vehicle, based on the guide route.

16. The information processing method according to claim 12, **characterized in that** the sound includes phone call voice received from a terminal device used by another user.

17. The information processing method according to claim 12, **characterized in that** the sound includes music being played back.

18. An information processing apparatus that communicates with a sound output device to be worn by a user, the information processing apparatus **characterized by** comprising:
route acquisition means for acquiring a guide route of a vehicle used by the user; and
control means for causing the sound output device to output a sound via communication with the sound output device while the vehicle is traveling on the guide route, wherein
the control means makes a left volume and a right volume of the sound imbalanced in accordance with an approaching degree of the vehicle to a location where the vehicle turns to left or right on the guide route.

19. An information processing apparatus that communicates with a sound output device to be worn by a user, the information processing apparatus **characterized by** comprising:
route acquisition means for acquiring a guide route of a vehicle used by the user; and
control means for causing the sound output device to output a sound via communication with the sound output device while the vehicle is traveling on the guide route, wherein
the control means makes a left volume and a right volume of the sound imbalanced in accordance with a current travel lane in which the vehicle is traveling toward a location where the vehicle turns to left or right on the guide route.

20. A program for causing an information processing apparatus to execute each step of the information processing method according to any one of claims 1 to 17.

21. A storage medium storing a program for causing an information processing apparatus to execute each step of the information processing method according to any one of claims 1 to 17.
